(19) **Europäisches Patentamt / European Patent Office / Office européen des brevets**

(11) **EP 2 167 599 B1**

(12) **EUROPEAN PATENT SPECIFICATION**

(45) Date of publication and mention
of the grant of the patent:
**22.07.2015 Bulletin 2015/30**

(51) Int Cl.:
*C09J 7/02* *(2006.01)*     *C09J 11/00* *(2006.01)*
*C08F 220/18* *(2006.01)*     *C08F 212/08* *(2006.01)*
*B32B 7/02* *(2006.01)*     *B32B 27/00* *(2006.01)*

(21) Application number: **08780847.3**

(22) Date of filing: **18.06.2008**

(86) International application number:
**PCT/US2008/067356**

(87) International publication number:
**WO 2008/157611 (24.12.2008 Gazette 2008/52)**

(54) **COLORED ACRYLIC ADHESIVE AND MARKING FILM**

FARBIGE ACRYLHAFT- UND MARKIERFOLIE

ADHÉSIF ACRYLIQUE COLORÉ ET FILM DE MARQUAGE

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **18.06.2007 JP 2007160326**
**28.02.2008 JP 2008047899**

(43) Date of publication of application:
**31.03.2010 Bulletin 2010/13**

(73) Proprietor: **3M Innovative Properties Company
Saint Paul, MN 55133-3427 (US)**

(72) Inventors:
• **ABE, Hidetoshi**
**Tokyo 158-8583 (JP)**
• **TAKAMATSU, Yorinobu**
**Tokyo 158-8583 (JP)**
• **FURUSAWA, Masaaki**
**Tokyo 158-8583 (JP)**
• **OHTOMO, Shinya**
**Tokyo 158-8583 (JP)**
• **YAMAMOTO, Takeo**
**Tokyo 158-8583 (JP)**

(74) Representative: **Vossius & Partner
Patentanwälte Rechtsanwälte mbB
Siebertstrasse 3
81675 München (DE)**

(56) References cited:
WO-A1-00/33796     KR-A- 20010 086 408
KR-A- 20050 110 041     KR-B1- 100 276 094
US-A- 5 612 136

## Description

FIELD

The present application relates to an acrylic colored adhesive, a method for preparation of the same, and a marking film.

BACKGROUND

Decorative adhesive articles having an adhesive layer formed on a film substrate have been used for trains, buildings, traffic signs, packaging or signs. These decorative adhesive articles are sometimes referred to as a "marking film". Some marking films comprise a colored film and a non-color adhesive layer disposed on the colored film, and others comprise a clear or colored film and a colored adhesive layer disposed on the clear film.

The colored adhesive layer may be colored by a coloring agent comprising a pigment and a dispersant. In some uses, the coloring agent of the colored adhesive layer combined with a dispersant comprising a (meth) acrylic ester polymer containing an aromatic vinyl monomer, an ester (meth)acrylic acid monomer having primary to tertiary amino groups, and an ester (meth) acrylic acid monomer having ammonium groups quaternized with aromatic vinyl monomers (See, e.g. JP 3500240 B).

In some applications, the adhesive is white. For example, a white toner comprising a white pigment and a polyester plasticizer having -10 degrees C of glass transition temperature, and a white adhesive comprising the white toner has been disclosed (See. e.g. JP 2004-51753 A).

Additionally, adhesive compositions comprising a blend of a polymer having (carboxylic groups and a polymer having amino groups (see, e.g. JP 3516035 B); and a (meth)acrylic copolymer having amino groups and a dispersant of non-aqueous paint pigment containing the (meth)acrylic copolymer (see, e.g. JP 2927701 B) have been disclosed.

Specific examples of adhesives with white pigments include stickers having white adhesive including an adhesive component, white pigments such as titanium oxide and metal flakes such as aluminum, and a colored film forming on the white adhesive was disclosed (see, e.g., JP 56-12875 B;JP 2547031 B; and JP 2003-183602 A.)

Additionally, it has been disclosed that an adhesive level which included an adhesive layer having an adhesive and a white pigment formed on a back surface of the white base material which includes polyethylene terephthalate and a white pigment (see, e.g., JP 5-108011 A.)

Further it was disclosed that a marking film having a white adhesive layer formed on one side of the colored transparent film having 30 to 90 % of hiding ratio (see, e.g., JP 2007-313651 A.)

Other solutions have also been presented to assist with adhesion loss after solvent printing the marking films. (See, e.g., JP2005-329642; JP7-238267 A; and JP3670861 B.)

Recently, the use of more colorful and stylish signs or advertisements is increasing. Marking films can be used to have desired colors, textures or designs on signs or advertisements. Additionally, the replacement cycle of marking films is getting shorter, sometimes from several days to several months, so the replacement of marking films, for example applying or peeling off the marking film without residue left on the substrate, should be easy even for unskilled workers.

SUMMARY

It is desirable to obtain adhesives having desired colors in various darkness or brightness, easy applying and peeling off, good adhesion and good appearance. Additionally, marking films having a hiding power capable to create opaque colors or designs on adherends are desirable. Marking films with improved adhesion after solvent inkjet printing is also desirable.

The present application is directed to providing a colored adhesive which has various kinds of colors, darkness or brightness, which can be applied and peeled easily and has good adhesion and appearance.

Further, the present application is directed to providing a marking film that comprises the acrylic colored adhesive formed on a film substrate, with good colorability, good adhesive qualities and a good stability.

Further, the present application is directed to providing a marking film that comprises the acrylic colored adhesive formed on a film substrate with good adhesion postsolvent printing.

The acrylic colored adhesive comprises a carboxylic group-containing (meth) acrylic polymer, a coloring agent comprising a pigment or a dye and an amino group-containing (meth) acrylic polymer free of aromatic vinyl monomers.

The acrylic colored adhesive can be prepared by preparing a coloring agent by mixing a pigment or a dye; and an amino group-containing (meth) acrylic polymer free of aromatic vinyl monomers, and mixing the resultant coloring agent and a carboxylic group-containing (meth) acrylic polymer.

In another embodiment, the acrylic colored adhesive can be prepared by preparing a coloring agent by mixing a pigment or a dye, and a carboxylic group-containing (meth) acrylic polymer, and mixing the resultant coloring agent and an amino group-containing (meth) acrylic polymer free of aromatic vinyl monomers.

Further embodiments of the application include a marking film comprising a base film layer, and an adhesive layer comprising the acrylic colored adhesive of the present application.

DETAILED DESCRIPTION

For the purpose of the present application, the term "(meth)acrylic" means acrylic or methacrylic in the present specification.

The acrylic colored adhesive of the present application comprises a carboxylic group-containing (meth) acrylic polymer, a coloring agent comprising pigment or dye, and an amino group-containing (meth) acrylic polymer free of aromatic vinyl monomers, wherein the weight ratio of the pigment or dye and the amino group-containing (meth) acrylic polymer in the colouring agent is 1 to 100 : 5 to 1000 parts per weight. The pigment may be present in the form of an inorganic filler.

The filler (e.g. pigment) or dye may be dispersed first within one of the polymers, making a coloring agent. By forming a coloring agent, that is, by dispersing the pigment or the dye in the polymer, larger amounts of the pigment or the dye can be dispersed stably in the adhesive. The coloring agent can comprise an amino group-containing (meth) acrylic polymer free of aromatic vinyl monomers, or a carboxylic group-containing (meth) acrylic polymer. In these embodiments, the carboxylic group-containing (meth) acrylic polymer in the coloring agent can include co-monomers having hydroxyl groups.

Generally, at least one polymer present in the acrylic colored adhesive is an adhesive polymer. The term "adhesive" means that the polymer has a tack at ambient temperature.

The term "an amino group-containing (meth) acrylic polymer free of aromatic vinyl monomers" means an amino group-containing (meth) acrylic polymer that does not contain aromatic vinyl monomers as a component of the polymer. Examples of the amino group-containing (meth) acrylic polymer free of aromatic vinyl monomers include polymers from styrene, $\alpha$-methylstyrene, vinyltoluene, vinylnaphthalene, vinylanthracene, vinylanthraquinone, (meth)acrylamides of aromatic amines or (meth)acrylates of hydroxyl group-containing aromatic compounds.

In some embodiments, the carboxylic group-containing (meth) acrylic polymer may be prepared by copolymerization of monoethylenic unsaturated monomers and carboxylic group-containing unsaturated monomers.

These polymerizations are preferably carried out by radical polymerization. In this case, known polymerization methods such as solution polymerization, suspension polymerization, emulsion polymerization or bulk polymerization can be used. Examples of initiators used include organic peroxides such as benzoyl peroxide, lauroyl peroxide and bis(4-tertiary-butyl cyclohexyl) peroxydicarbonate, and azo-based polymerization initiators such as 2,2'-azobisisobutyronitrile, 2,2'-azobis- 2-methylbutyronitrile, 4,4'-azobis-4-cyanovaleric acid, 2,2'-azobis(2-methylpropionic acid) dimethyl and azobis-2,4- dimethylvaleronitrile (AVN). The amount of these initiators used should be about 0.05 to about 5 parts by weight per 100 parts by weight of monomer mixture.

The inorganic filler may be silica, aluminum hydroxide, modified titanium oxide, or a pigment. The pigment or the dye includes organic/inorganic pigments or dyes. In the present specification, the term "a pigment of a dye'' is described as "a pigment". Generally, the pigment can be any color, including white. In one embodiment, for example when forming a coloring agent with a pigment and the carboxylic group-containing (meth) acrylic polymer, pigments other than white are used.

By mixing the polymer polymerized of the carboxylic group-containing monomer and the polymer polymerized of the amino group-containing monomer, the pigment can be well-dispersed and stable in the acrylic colored adhesive. Therefore, the colored adhesive can contain more pigments. Additionally, the colored adhesive can be used as an adhesive layer on a marking film, as the adhesion of the adhesive layer can be maintained by retaining the pigment in the adhesive layer, i.e. avoiding migration of pigments to the surface of the adhesive layer.

In one embodiment, the acrylic colored adhesive of the present disclosure is made by the steps of preparing a coloring agent by mixing a pigment and an amino group-containing (meth) acrylic polymer free of aromatic vinyl monomers, and mixing the resultant coloring agent and a carboxylic group-containing (meth) acrylic polymer.

In another embodiment, the acrylic colored adhesive of the present disclosure is made by the steps of preparing a coloring agent by mixing a pigment and a carboxylic group-containing (meth) acrylic polymer, and mixing the resultant coloring agent and an amino group-containing (meth) acrylic polymer free of aromatic vinyl monomers.

The step of preparing the coloring agent by mixing the pigment and the polymer is carried out using known mixing methods. Generally, only slight mixing is necessary to prepare the uniformly dispersed coloring agent.

The marking film of the present application includes a base film layer and an adhesive layer comprising the acrylic colored adhesive of the present application, and may further include a liner. The base film may comprise any known film. The film can be clear, a solid color and/or comprise printing on the surface. If the film is clear, a marking film having desired colors, textures or designs can be provided by combining the clear film and the colored adhesive, or the color or design printed on the surface of the base film and the colored adhesive.

Carboxylic group-containing (methy) acrylic polymers

The carboxylic group-containing (meth) acrylic polymer is a polymer including a monoethylenic unsaturated monomer as a major ingredient and a carboxylic group-containing monoethylenic unsaturated monomer.

The monoethylenic unsaturated monomer is a main component of a polymer. It is typically represented with the formula $CH_2=CR^1COOR^2$, wherein $R^1$ represents a hydrogen atom or a methyl group and $R^2$ represents a linear, cyclic or branched alkyl group, a phenyl group, an alkoxyalkyl group or a phenoxyalkyl group, a hydroxyalkyl group or a cyclic ether group. Examples of such monomers include alkyl (meth)acrylates such as methyl (meth)acrylate, ethyl (meth)acrylate, n-butyl (meth)acrylate, isoamyl (meth)acrylate, n-hexyl (meth)acrylate, 2-ethylhexyl (meth)acrylate, isooctyl (meth)acrylate, isononyl (meth)acrylate, decyl (meth)acrylate, dodecyl (meth)acrylate, cyclohexyl (meth)acrylate; phenoxyalkyl (meth)acrylates such as phenoxyethyl (meth)acrylate; alkoxyalkyl (meth)acrylates such as methoxypropyl (meth)acrylate and 2-methoxybutyl (meth)acrylate; hydroxyalkyl(meth)acrylates such as 2-hydroxyethyl (meth)acrylate, 2-hydroxypropyl (meth)acrylate and 4-hydroxybutyl (meth)acrylate, and cyclic ether containing (meth)acrylates such as glycidyl (meth)acrylate, and tetrahydrofurfuryl (meth)acrylate. One or more monoethylenic unsaturated monomers can be used, if needed.

The carboxylic group-containing monoethylenic unsaturated monomer includes unsaturated carboxylic acids such as acrylic acid, methacrylic acid, or crotonic acid; unsaturated dicarboxylic acids such as maleic acid, fumeric acid, citraconic acid, or itaconic acid; ω-carboxy polycaprolactone monoacrylate, phthalic acid monohydroxyethyl (meth)acrylate, β-carboxyethyl acrylate, 2-(meth)acryloyloxy ethyl succinate or 2-(meth)acryloyloxy ethyl hexahydrophthalate.

The carboxylic group-containing (meth) acrylic polymer can be prepared by, for example, but not limited to, co-polymerization of about 80 to about 95.5 parts by weight of the monoethylenic unsaturated monomer and about 0.5 to about 20 parts by weight of the carboxylic group-containing monoethylenic unsaturated monomer. Alternatively, about 80 to about 95.5 parts by weight of the monoethylenic unsaturated monomer and about 1 to about 10 parts by weight of the carboxylic group-containing monoethylenic unsaturated monomer can be useful for the above co-polymerization.

The carboxylic group-containing (meth) acrylic polymer can be used as a major component of the acrylic colored adhesive of the present application. Alternatively, the carboxylic group-containing (meth) acrylic polymer can be used as one component of the coloring agent, if the acrylic adhesive includes the coloring agent.

When the carboxylic group-containing (meth) acrylic polymer is a major component of the adhesive, the polymer is an adhesive polymer. The average molecular weight of the group-containing (meth) acrylic polymer can be, for example, but not limited to, about 100,000 to about 2,000,000 or about 300,000 to about 1,000,000.

When the carboxylic group-containing (meth) acrylic polymer is a component of a coloring agent, either or both of the adhesive polymer and the non-adhesive polymer (a non-tacky polymer) can be used. The non-tacky polymer includes, for example, a copolymer copolymerized of methyl methacrylate, butyl methacrylate and methacrylate. In this case, the carboxylic group-containing (meth) acrylic polymer can further include monomers having hydroxyl groups as a co-monomer. The monomers include hydroxyalkyl (meth)acrylates (e.g. 2-hydroxyethyl (meth)acrylate, 3-hydroxypropyl (meth)acrylate, 2-hydroxypropyl (meth)acrylate, or 4-hydroxybutyl (meth)acrylate), glycerinmono(meth)acrylate, 2-hydroxy-3-phenoxypropyl(meth)acrylate or "Placcel F" series (manufactured by Dicel Chemical Industries, Ltd.) as polycaprolactone-modified products of 2-hydroxyethyl (meth)acrylate. These monomers can be used alone or in combination. The average molecular weight of the carboxylic group-containing (meth) acrylic polymer can be, for example, but not limited to, 1,000 to 1,500,000 or 10,000 to 800,000.

Amino group-containing (meth) acrylic polymers free of aromatic vinyl monomers

The amino group-containing (meth) acrylic polymer free of aromatic vinyl monomers is a polymer containing monoethylenic unsaturated monomers as a main component and an amino group-containing monoethylenic unsaturated monomer, which is free of aromatic vinyl monomers. The monoethylenic unsaturated monomer is the same as that of the (meth) acrylic adhesive polymer above. The amino group-containing (meth) acrylic polymer free of aromatic vinyl monomers includes polymer made from styrene, α-methylstyrene, vinyltoluene, vinylnaphthalene, vinylanthracene, vinyl anthraquinone, (meth)acrylamides of aromatic amines or (meth)acrylates of hydroxyl group-containing aromatic compounds. The aromatic amines include aniline, benzylamine, naphthylamine, aminoanthracene, aminoanthraquinone or analogues thereof. The hydroxyl group-containing aromatic compounds include hydroxyl group-containing compounds corresponding to the aromatic amines. The method of preparing the amino group-containing (meth) acrylic polymer includes copolymerization of monoethylenic unsaturated monomers and amino group-containing monoethylenic unsaturated monomers.

The amino group containing-monoethylenic unsaturated monomer includes dialkylamino alkyl (meth)acrylates such as N,N-dimethylamino ethyl acrylate (DMAEA) or N,N-dimethylamino ethyl methacrylate (DMAEMA); dialkylamino alkyl (meth)acrylamides such as N,N-dimethylamino propyl acrylamide (DMAPAA) or N,N-dimethylamino propyl methacrylamide; or dialkylamino alkyl vinyl ethers such as N,N-dimethylamino ethyl vinyl ether or N,N-diethylamino ethyl vinyl ether; or a mixture thereof.

The amino group containing (meth) acrylic polymer free of aromatic vinyl monomers can be prepared by, for example, but not limited to, co-polymerization of 80 to 99.5 parts by weight of the monoethylenic unsaturated monomer and 0.5 to 20 parts by weight of the amino group-containing monoethylenic unsaturated monomer. Alternatively, about 90 to about 99 parts by weight of the monoethylenic unsaturated monomer and about 1 to about 10 parts by weight of the amino group-containing monoethylenic unsaturated monomer can be useful for the above co-polymerization.

The amino group containing (meth) acrylic polymer free of aromatic vinyl monomers can be used as a major component of the acrylic colored adhesive of the present application. Alternatively, the amino group containing (meth) acrylic polymer free of aromatic vinyl monomers can be used as one component of the coloring agent.

When the amino group-containing (meth) acrylic polymer free of aromatic vinyl monomers is the major component, the polymer is an adhesive polymer. The adhesive polymer includes, for example, a copolymer of BA and DMAEMA (ratio, e.g., 90:10). In this case, the polymer having adhesion provides adhesion of the present adhesive. The average molecular weight of the amino group containing (meth) acrylic polymer free of aromatic vinyl monomers in this case can be, for example, but not limited to, about 100,000 to about 2,000,000 or about 300,000 to about 1,000,000.

When the amino group-containing (meth) acrylic polymer free of aromatic vinyl monomers is one component of the coloring agent, either or both of the adhesive polymer and the non-adhesive polymer (non-tacky polymer) can be used. The average molecular weight of the amino group containing (meth) acrylic polymer free of aromatic vinyl monomers in this case can be, for example, but not limited to, about 1,000 to about 500,000, or about 5,000 to about 200,000, or more preferably about 10,000 to about 100,000.

Inorganic Fillers

The inorganic filler may be a pigment. In other embodiments, the filler does not act as a pigment. Examples of inorganic fillers include, for example, silica, aluminum hydroxide and modified titanium oxide such as Dymic white SZ 7030, available from Daimehi Seika.

Pigments or dyes

The pigment or the dye of the present application includes known pigments such as inorganic pigments or organic pigments, or known dyes. The inorganic pigments include, for example, zinc carbonate, zinc oxide, zinc sulfide, talc, kaolin, calcium carbonate, titanium oxide, titanium dioxide, silica, lithium fluoride, calcium fluoride, barium sulfate, alumina, zirconia, iron oxide, iron hydroxide, chromic oxide, spinel calcinations, chromic acids, chromic vermillion, iron blue, aluminum powder, bronze powder or calcium phosphate. The organic pigments include phthalocyanine, azo, condensed azo, azo-lake, anthraquinone, perylene-perynone, indigo-thioindigo, isoindolinone, azo-methine-azo, dioxadine, quinaquridone, aniline black, triphenyl methane, or carbon black pigments. The dyes include azo, anthraquinone, quinophtalone, styryl, diphenylmethane, triphenylmethane, oxazine, triazine, xanthene, methane, azomethine, acridine or diazine.

In certain embodiments, the pigment is white. The white pigment includes known white pigments, for example, zinc carbonate, zinc oxide, zinc sulfide or titanium oxide. Additives such as talc, kaolin or calcium carbonate can be contained.

The amount of the white pigment includes from about 25 parts by weight to about 150 parts by weight with respect to about 100 parts by weight of the carboxylic group-containing (meth) acrylic polymer. These amounts can provide enough hiding power and adhesion between the colored layer and the adhesive layer.

These pigments or dyes can be used alone or as a mixture thereof. These pigments or dyes in any form or condition can be used. Those pigments or dyes pretreated by an ordinary method for dispersion can also be used.

Coloring agents

The coloring agent of the present application is formed by dispersing a pigment or a dye in a either an amino group-containing (meth) acrylic polymer free of aromatic vinyl monomers or a carboxylic group-containing (meth) acrylic polymer.

The pigment or the dye, the amino group-containing (meth) acrylic polymer free of aromatic vinyl monomers and the carboxylic group-containing (meth) acrylic polymer in the coloring agent are the same as previously described.

In the present specification, the amino group-containing (meth) acrylic polymer free of aromatic vinyl monomers or the carboxylic group-containing (meth) acrylic polymer in the coloring agent may be expressed as "the polymer of the coloring agent"; and the polymers, not from the coloring agent, in the acrylic colored adhesive of the present application may be expressed as "the polymer of the adhesive".

The polymer of the coloring agent is generally compatible with the polymer of the adhesive from the view of prolonged stability.

The coloring agent of the present application can be prepared by mixing the pigment or the dye and the polymer of the coloring agent according to the known method. For example, using a paint shaker, a sand grind mill, ball mill, attritor mill, or three-roll mill can be used for the mixing. In the mixing process, aqueous or non-aqueous solvent can be added, if needed.

The coloring agent of the present application is well dispersed without aggregation of the pigments or dyes right after the preparation. Further the coloring agent can maintain the well-dispersed condition even after long storage (e.g. about one month later) as well as right after the preparation. This can be said not only in the case where the coloring agent prepared by using a relatively vigorous apparatus such as sand grind mill, ball mill, attritor mill or three-roll mill, but also in the case where the coloring agent is prepared by just using a relatively mild apparatus such as, for example, a paint shaker or the like. Further, when the relatively mild apparatus is used, the well-dispersed coloring agent without aggregation of the pigments or dyes can be prepared by mixing within a relatively short time (e.g. about 10 minutes).

When two or more kinds of pigments or dyes are used, the coloring agent can be prepared by mixing the pigments or dyes with the polymer of the coloring agent. Alternatively, the coloring agent can be obtained by preparing two or more different coloring agents separately by mixing each pigment or dye with each polymer of the coloring agent, then mixing the coloring agents having different colors. In the latter case, for example, one coloring agent can be obtained by mixing one pigment or dye and the amino group-containing (meth) acrylic polymer free of aromatic vinyl monomers, and another coloring agent can be obtained by mixing another pigment or dye and the carboxylic acid-containing (meth) acrylic polymer. The combination of pigment or dye and the polymer of the coloring agent can be selected randomly. When the inorganic pigment such as titanium oxide is used, the amino group-containing (meth) acrylic polymer free of aromatic vinyl monomers can be preferably used. By mixing two or more kinds of pigments or dyes, the coloring agent having a desired color can be obtained.

In the preparation of the coloring agent, the ratio of the pigments or dyes and the polymer of the coloring agent can be controlled based on the desired color, darkness or brightness of the acrylic colored adhesive. Preferred ratio of the pigments or dye to the polymer of the coloring agent may be 1 to 100 : 5 to 1000 (parts by weight), about 1 to about 100 : about 10 to about 700 (parts by weight), or about 1 to about 100 : about 10 to about 500 (parts by weight).

Cross-linkers

The acrylic colored adhesive can further contain a cross-linker. The cross-linker containing functional groups that can react with carboxylic groups includes bisamide cross-linking agents (for example, 1,1'-isophthaloyl-bis(2-methylaziridine), azirizine cross-linking agents (for example, Chemitite PZ33 made by Nihon Shokubai, NeoCryl CX-100 made by Avecia), carbodiimide cross-linking agents (for example, Carbodilite V-03, V-05, V-07 made by Nisshinbo), epoxy cross-linking agents (for example, E-AX, E-5XM, E5C made by Soken Chemical & Engineering), isocyanate cross-linking agents (for example, Coronate L and Coronate HK made by Nihon Urethane, Desmodur H, Desmodur W and Desmodur I made by Bayer) can be used. An amount of the cross-linking agent is from about 0.01 to about 0.5 equivalents to a carboxyl group in the carboxyl group-containing (meth)acrylic polymer. On the other hand, a cross-linker containing functional groups that can react with amino groups includes epoxy cross-linking agents (for example, E-AX, E-5XM, E5C made by Soken Chemical & Engineering), isocyanate cross-linking agents (for example, Coronate L and Coronate HK made by Nihon Urethane, Desmodur H, Desmodur W and Desmodur I made by Bayer).

An amount of the cross-linking agent is from about 0.01 to about 0.5 equivalents to carboxyl group of the carboxyl group-containing polymer or amino groups of the amino group-containing polymer.

Acrylic colored adhesive

The acrylic colored adhesive of the present application can be obtained by mixing the carboxylic group-containing (meth) acrylic polymer, and the amino group-containing (meth) acrylic polymer free of aromatic vinyl monomers in the ordinary manner.

For example, each component was poured into a vessel at almost the same time, mixed with a THINKY brand paint shaker, sand grind mill, ball mill, attritor mill or three-roll mill, resulting in the colored adhesive. In that case, the cross-linker or the known aqueous or organic solvents can be used. Alternatively, the pigment is mixed with the aqueous or organic solvents, then can be mixed with the other components.

In the present application, dispersion of the pigment is improved by using the carboxylic group-containing polymer and the amino group-containing polymer, and the colored adhesive and the marking film using the adhesive can be obtained thereby. Therefore as long as these two kinds of polymers are used, either polymer can be the polymer of the adhesive (or the polymer of the coloring agent), one polymer can combine the polymer of the adhesive with the polymer of the coloring agent. At the same time, as long as these two kinds of polymers are used, the colored adhesive of the present application can be prepared by every method, such as for example, one of the components is mixed firstly, then others are mixed, or each component is mixed randomly.

An amount of each component of the acrylic colored adhesive can be applied in the range that can achieve the object of the present application. When the carboxylic group-containing (meth)acrylic polymer is used as a major component of the colored adhesive, the amount includes, but not limited to, about 0 to about 50 weight parts of the carboxylic group-containing (meth)acrylic polymer, about 0.1 to about 200 weight parts of the pigments or dyes, about 0.1 to about 50 weight parts of the amino group-containing (meth) acrylic polymer free of aromatic vinyl monomers and about 0.001 to about 10 weight parts of the cross-linker, with respect to 100 weight parts of the carboxylic group-containing (meth)acrylic polymer. When the amino group-containing (meth) acrylic polymer free of aromatic vinyl monomers is used as a major component of the colored adhesive, the amount includes, but not limited to, about 0.1 to about 50 weight parts of the carboxylic group-containing (meth)acrylic polymer, about 0.1 to about 200 weight parts of the pigments or dyes, about 0 to about 50 weight parts of the amino group-containing (meth) acrylic polymer free of aromatic vinyl monomers and about 0.001 to about 10 weight parts of the cross-linker, with respect to 100 weight parts of the amino group-containing (meth) acrylic polymer free of aromatic vinyl monomers.

In some embodiments, the adhesive layer is an acrylic white adhesive, wherein the acrylic white adhesive comprises a carboxylic group-containing (meth) acrylic polymer, about 25 parts by weight to about 150 parts by weight of white pigment when the amount of the carboxylic group-containing (meth) acrylic polymer is 100 parts by weight, and an amino group-containing (meth) acrylic polymer not having aromatic vinyl monomers.

The colored acrylic adhesive of the present application can be prepared by mixing the coloring agent, the carboxylic group-containing (meth) acrylic polymer and the cross-linker according to known methods. Alternatively, the colored acrylic adhesive of the present application can be prepared by the following method 1 or 2.

In a first embodiment, Step 1 comprises preparing a pigment or a dye, and an amino group-containing (meth) acrylic polymer having no vinyl monomers. Step 2 then comprises mixing the resultant coloring agent of the Step 1, a carboxylic group-containing (meth) acrylic polymer and a cross-linker.

In a second embodiment, Step 1 comprises preparing a coloring agent by mixing a pigment or a dye, and a carboxylic group-containing (meth) acrylic polymer, and Step 2 comprises mixing the resultant coloring agent of the Step 1, a carboxylic group-containing (meth) acrylic polymer, an amino group-containing (meth) acrylic polymer free of aromatic vinyl monomers and a cross-linker.

Marking films

The marking film of the present application contains a base film layer and the acrylic colored adhesive layer comprising the colored adhesive of the present application. Preferably, the acrylic colored adhesive layer can be disposed on one surface of the base film layer. The layered structure of the acrylic colored adhesive layer and the base film layer can be repeated. For example, the acrylic colored adhesive layer can be disposed on one surface of the base film layer, further another base film layer can be disposed on the free surface of the acrylic colored adhesive layer, subsequently an adhesive layer containing a known adhesive can be laminated on the second base film layer.

The base film layer includes, but not limited to, for example, polyethylene film, polypropylene film, polyester film, polycarbonate film, polyvinyl chloride film, polyvinylidene chloride film, polystyrene film or polyamide film. These films can have color or may be clear and colorless, transparent, or allow the color of the acrylic colored adhesive layer to show. Alternatively, these films may have a transparency such that darkness or brightness of the color of these films can be affected by the color of the acrylic colored adhesive layer. Illustrations, designs, colors or letters can be printed on the base film layer by known methods such as gravure printing or calendar printing.

These films can be prepared by a conventional film forming method by using resin and colorant containing pigment or dye. Specifically, the film can be formed by mixing the resin solution and the colorant solution, optionally adding a volatile solvent such as toluene or ethyl acetate to adjust a viscosity of the solution. Then the solution is coated on the release surface of a liner, the volatile solvent is dried, and then the film is formed. The coating can be conducted by known methods such as bar coating, knife coating, roll coating or die coating.

In the marking film of the present application, the sequence of layers of the marking film, numbers of layers, or with or without coloring or printing can be randomly selected. It is not necessary that a film layer such as the base film layer and an adhesive layer such as the acrylic adhesive layer laminate with alternating. Applying the above-mentioned factors randomly can provide the marking film having various kinds of illustrations, designs, colors or textures.

The marking film of the present application may further comprise a liner (release paper) that is disposed on the opposite of the adhesive layer from the base film layer. As the liner of the present application, liners generally used in an adhesive tape area can be used. Preferably, the liner includes, but is riot limited to, for example, papers; plastics such as polyethylene, polypropylene, polyester or cellulose acetate; or papers coated by such plastics, or laminated with the plastics. These liners can be used without pretreatment, or with pretreatment by silicone or the like to improve peeling property.

The marking film of the present application may further comprise some functional layers such as a primer layer.

The thickness of the marking film is not limited. Preferably, the thickness of the base film layer can be about 5 to about 300 $\mu$m; that of the adhesive layer can be about 5 to about 100 $\mu$m; and that of the liner can be about 10 to about 500 $\mu$m, more preferably about 25 to about 200 $\mu$m.

The marking film of the present application can be prepared by known methods. The following is one of the examples of the methods. The organic solvent solution of the acrylic adhesive of the present application is coated on the liner by knife coating or bar coating, then drying to form the adhesive layer is conducted. The obtained adhesive layer is laminated on the base film layer by dry laminating to form the marking film.

In the present application, the marking film having the desired illustrations, designs, colors or textures can be obtained by combining the acrylic colored adhesive that has the desired color obtainable by mixing of two or more kinds of the pigments with the clear base film or the printed colors or patterns on the base film.

Examples

The present application is more particularly described in the following examples that are intended as illustrations only, since numerous modifications and variations within the scope of the present application will be apparent to those skilled in the art. Unless otherwise noted, all parts, percentages, and ratios reported in the following examples are on a weight basis, and all reagents used in the examples were obtained, or are available, from the chemical suppliers described below, or may be synthesized by conventional techniques.

In the present specification, the following abbreviations can be used.

| | |
|---|---|
| MMA: | methyl methacrylate |
| BMA: | butyl methacrylate |
| DMAEMA: | dimethylaminoethyl methacrylate |
| BA: | butyl acrylate |
| AA: | acrylic acid |
| HEA: | hydroxylethyl acrylate |
| 2EHA: | 2-ethylhexyl acrylate |
| Vac : | vinyl acetate |
| AN: | acrylonitrile |
| MIBK: | methyl iso-butyl ketone |
| EtAc: | ethyl acetate |

Preparation of (meth)acrylic polymers

Polymer 1 (amino group-containing): MMA, BMA and DMAEMA (weight ratio 60:34:6) were polymerized in ethyl acetate to form Polymer 1. The resultant polymer had 68,000 of molecular weight, 66 degrees C (calculated value) of glass transition temperature (Tg), and 39 wt% of solids.

Polymer 2 (carboxylic group-containing): BA and AA (weight ratio 94:6) were polymerized in toluene/ethyl acetate to form Polymer 2. The resultant polymer had 760,000 of molecular weight, -48 degrees C of glass transition temperature (Tg), and 33 wt% of solids.

Polymer 3 (carboxylic and hydroxyl groups-containing): BA, AA and HEA (weight ratio 96:4:0.5) were polymerized in toluene/ethyl acetate to form Polymer 3. The resultant polymer had 580,000 of molecular weight, -50 degrees C of glass transition temperature (Tg), and 42 wt% of solids.

Polymer 4 (carboxylic and hydroxyl groups-containing): BA, 2HEA, vinyl acetate and MMA (weight ratio 60:30:5:5) were polymerized in ethyl acetate to form Polymer 4. The resultant polymer had 300,000 of molecular weight, -50 degrees C of glass transition temperature (Tg), and 40 wt% of solids.

Pigments or dyes used

Pigment 1: TiPureR960, provided by DuPont, titanium oxide
Pigment 2: CR90, provided by Ishihara Sangyo, titanium oxide
Pigment 3: Phthalocyanine green 2GNL, provided by Dainichi-Seika
Pigment 4: Phthalocyanine blue 4982, provided by Dainichi-Seika
Pigment 5: IRGAZIN® DPP RED BO, provided by Ciba Specialty Chemicals
Pigment 6: IRGAZIN® YELLOW 2GLTE, provided by Ciba Specialty Chemicals Crosslinkers used
Crosslinker1 : E-AX provided by Soken-Chemical, Epoxy, 5 wt% solids, a solvent is toluene.

Crosslinker2: Bisamide, 1,1'-isophthaloyl-bis(2-methylaziridine), 5 wt% solids, a solvent is toluene.

<u>Carboxylic group-containing (meth) acrylic polymer (as a major component, having adhesion)</u>

Adhesive polymer 1: BA, 2HEA, AN and AA (weight ratio 58:36:1:5) were polymerized in ethyl acetate to form Adhesive polymer 1. The resultant adhesive had 500,000 of molecular weight and -53 degrees C Tg.

Adhesive Polymer 2: BA-AN-AA (weight ratio 95:3:2) were polymerized in EtAc/ Toluene to form Adhesive Polymer 2. The resultant adhesive had 350,000 of molecular weight and -49 degrees C Tg.

Adhesive Polymer 3: BA-AA (weight ratio 94:6) were polymerized in EtAc/ Toluene to form

Adhesive Polymer 3. The resultant adhesive had 760,000 of molecular weight and -48 degrees C Tg.

Adhesive Polymer 4: BA-AA (weight ratio 96:4) were polymerized in EtAc/ Toluene to form Adhesive Polymer 4. The resultant adhesive had 580,000 of molecular weight and -50 degrees C Tg.

Adhesive Polymer 5: BA-2EHA-VAc-AA (weight ratio 40:47:8:5) were polymerized in EtAc/ Toluene to form Adhesive Polymer 5. The resultant adhesive had 550,000 of molecular weight and -51 degrees C Tg.

Adhesive Polymer 6: BA-VAc-AA (weight ratio 96:2:2) were polymerized in EtAc/ Toluene to form Adhesive Polymer 6. The resultant adhesive had 600,000 of molecular weight and -51 degrees C Tg.

Adhesive Polymer 7: 2EHA-AA (weight ratio 97:3) were polymerized in EtAc/ Toluene to form Adhesive Polymer 7. The resultant adhesive had 500,000 of molecular weight and -64 degrees C Tg.

<u>Solution stability test of pigments (Examples 1 to 6. Comparative examples 1 to 3)</u>

The pigment solutions obtained in Examples 1 to 6 and Comparative examples 1 to 3 were stored for one month. Then fluidity and gel generation of the solutions were judged with a visual evaluation; and ranked "Good'' for a fluid-able solution without a gel generation, and ''Poor" for a not fluid-able with a gel generation. The results are shown in Table 1.

<u>Compatibility of pigments in the adhesives (Examples 7 to 14, Comparative examples 4 to 6)</u>

To the mixture of the pigment and the adhesive was added the crosslinker. The compatibility of the resultant adhesive solutions was detected with a visual evaluation. The compatibility was judged "Good" for the solution in which the pigment dispersed easily, "Fair" for the solution in which the pigment did not disperse enough, and "Poor" for the solution in which the pigment precipitated. The results are shown in Table 3.

<u>Observation of an appearance of the adhesive surface (Examples 7 to 14, Comparative examples 4 to 6, Reference 1)</u>

The appearance of the adhesive layer after coating on the liner and drying was detected with a visual evaluation, and judged "Good" for the adhesive having a smooth appearance and "Poor" for the adhesive having a rough appearance. The results are shown in Table 3.

<u>Detection of marking films' adhesion (Examples 7 to 14, Comparative examples 4 to 6, Reference 1)</u>

Film samples were cut into 150 mm length by 25mm width to form specimens. The specimens were applied on the melamine painted panel produced by Paltec at 20 degrees C in accordance with JIS 0237 8.2.3, then left for 48 hours. The 180 degrees peel force was measured with Tensilon and the results are shown in Table 3. The jaws speed was 300mm/minute.

<u>Test of marking films' removability (Examples 7 to 14. Comparative examples 4 to 6, Reference 1)</u>

Film samples were cut into 150 mm length by 25mm width to form specimens. The specimens were applied on the melamine painted panel produced by Paltec at 20 degrees C in accordance with JIS 0237 8.2.3., then left for seven days at 65 degrees C. Subsequently, the specimens were removed, then adhesive residue and/or pigment/dye residue on the melamine painted panel was measured with a visual evaluation, then judged "Good" for no residue on the panel, and "Poor" for some residue on the panel or color migration to the panel. The results are shown in Table 3.

<u>Test of marking films' peeling tack (Examples 7 to 14. Comparative examples 4 to 6, Reference 1)</u>

Film samples were cut into 150 mm length by 25mm width to form specimens. The specimens were applied on the melamine painted panel produced by Paltec at 20 degrees C by a squeegee, then the specimens were stripped by hand quickly, and the peeling tack was measured with a sensory evaluation. The peeling tack was ranked as "Good" if the specimen could be removed easily, as "Fair" if the tack was strong but the sample could be removed without film rupture, and as "Poor" if the specimen could not be removed without film rupture. The results are shown in Table 3.

Heat shrinkability test of the marking films (Examples 7 to 14, Comparative examples 4 to 6. Reference 1).

Film samples were cut into 100 mm length by 50mm width to form specimens. The specimens were applied on the aluminum plate at 23 degrees C by a squeegee, then the specimens were left for 24 hours. Subsequently the specimens were cut in a cross-shape, then aging in the oven at 65 degrees C for 24 hours was conducted. After setting the specimens aside the oven, the opening of the cross-shaped cut was measured by a loupe. The results are shown in Table 3.

Examples 1 to 6, Comparative examples 1 to 3

To each polymer and pigment listed in Table 1 was added 40 parts by weight of MIBK, then the mixture was mixed with paint shaker (ARE250 by Thinky Limited) for 10 minutes to furnish the coloring agent.

Examples 7 to 14

Preparation of the base film layer

Polymer solution was prepared by mixing 100 parts by weight of Polymer 1 and 70 parts by weight of Polymer 2. To the resultant polymer solution was added Crosslinker 2. The ratio of Polymer 2:Crosslinker 2 was 100:3 by weight. The resultant was coated onto the 50 $\mu$m release polyester film with a knife coater, then cross linked by heating at 95 degrees C for five minutes, subsequently, at 155 degrees C for two minutes. After removing the release polyester film, the clear acrylic film (the titled base film layer) having a thickness of 50 $\mu$m was obtained.

Reparation of the coloring agent

The coloring agents listed in Table 2 were prepared in the same manner as Examples 1 to 6.

Preparation of the adhesive layer

To the resultant coloring agents was added Polymer 1, then crosslinkers were added to give adhesive solution. The ratios of each component except solvents in the adhesive solution are shown in Table 2. The obtained adhesive solution was coated onto the release polyester film with a knife coater, then cross linked by heating at 90 degrees C for five minutes. After drying, the titled adhesive layer having a thickness of 30 $\mu$m was obtained.

Preparation of the marking film

The obtained adhesive layer and the base film layer were dry-laminated to give the titled marking film.

Comparative examples 4 to 6, Reference 1

Preparation of the adhesive

To Pigment 3 was added 50 parts by weight of MIBK, then the mixture was mixed with paint shaker (ARE250 by Thinky) for 10 minutes to give the coloring agent. The obtained coloring agent was mixed with Adhesive polymer 1, then a crosslinker was added to give the adhesive solution. The ratios of each component are shown in Table 2. Pigment 3 was an acrylic polymer pre-containing pigment (Comparative example 4).

Pigment 3 same as in example 3 was prepared. To the obtained coloring agent was added Adhesive polymer 1, then a crosslinker was added to give the adhesive solution. The ratios of each component are shown in Table 2 (Comparative example 5).

Adhesive polymer 1, Pigment 1 and Crosslinker 1 were mixed, then ethyl acetate and MIBK were added and the mixture was mixed with paint shaker (ARE 250 by Thinky) for 30 minutes to give the adhesive solution. The ratio of Adhesive polymer 1, Pigment 1, Crosslinker 1, ethyl acetate and MIBK was 100:15:0.2:300:50 in weight ratio (Comparative example 6).

To Adhesive polymer 1 was added Crosslinker 1 to give the adhesive solution without pigments. The ratio of Adhesive polymer 1 and Crosslinker 1 was 100:0.2 in weight ratio (solid ratio) (Reference 1).

Preparation of the marking film

Each obtained adhesive solution was film-formed in the same manner as the examples 7 to 14, then laminated with the obtained clear acrylic film (the base film layer) to give the marking film (Comparative examples 4 to 7, Reference 1).

Table 1

|  | Coloring agent | | Ratio in the coloring agent (parts by weight) | | Solution condition |
|---|---|---|---|---|---|
|  | Acrylic polymer | Pigment | Pigment | Polymer |  |
| Ex. 1 | Polymer1 | Pigment1 | 50 | 10 | Good |
| Ex.2 | Polymer1 | Pigment2 | 10 | 15 | Good |
| Ex.3 | Polymer3 | Pigment2 | 10 | 15 | Good |
| Ex.4 | Polymer3 | Pigment4 | 10 | 15 | Good |
| Ex.5 | Polymer3 | Pigment5 | 10 | 15 | Good |
| Ex.6 | Polymer3 | Pigment6 | 5 | 20 | Good |
| Cex.1 | Polymer2 | Pigment 1 | 30 | 10 | Poor |
| Cex.2 | Polymer3 | Pigment1 | 30 | 10 | Poor |
| Cex.3 | Polymer4 | Pigment 1 | 30 | 10 | Poor |

Table 2

| | Adhesives | | | | | | | | | | | | |
|---|---|---|---|---|---|---|---|---|---|---|---|---|---|
| | Component of the Coloring agent | | | | | | | | | | | | |
| | | Pigment | | | | | | Acrylic polymer | | | | | |
| | No. | 1 | 2 | 3 | 4 | 5 | 6 | Polymer 1 | Polymer 3 | Polymer 1 *1 | Adhesive polymer1 | Crosslinker 1 |
| Ex.7 | 1 | 15 | - | - | - | - | - | 3 | - | - | 100 | 0.2 |
| Ex.8 | 1 | 30 | - | - | - | - | - | 6 | - | - | 100 | 0.2 |
| Ex.9 | 2 | - | 8 | - | - | - | - | 13 | - | - | 100 | 0.2 |
| Ex.10 | 3 | - | 8 | - | - | - | - | - | 13 | 13 | 100 | 0.2 |
| Ex.11 | 1,3 | 15 | 2 | - | - | - | - | 3 | 3 | - | 100 | 0.2 |
| Ex.12 | 4 | - | - | - | 8 | - | - | - | 13 | 13 | 100 | 0.2 |
| Ex.13 | 5 | - | - | - | - | 8 | - | - | 13 | 13 | 100 | 0.2 |
| Ex.14 | 6 | - | - | - | - | - | 4 | - | 17 | 17 | 100 | 0.2 |
| Cex.4 | - | - | - | 15 | - | - | - | - | - | - | 100 | 0.2 |
| Cex.5 | 3 | - | 8 | - | - | - | - | - | 13 | - | 100 | 0.2 |
| Cex.6 | - | 15 | - | - | - | - | - | - | - | - | 100 | 0.2 |
| Ref.1 | - | - | - | - | - | - | - | - | - | - | 100 | 0.2 |
| *1 : Amount of Polymer 1 additionally added after the coloring agent prepared<br>Cex. 5 is an example according to the present invention. | | | | | | | | | | | | |

Table 3

|  | Compatibility *2 | Adhesion | Removability | Peeling tack | Appearance | Heat shrinkability (mm) |
|---|---|---|---|---|---|---|
| Ex.7 | Good | 17 | Good | Good | Good | 0.05 |
| Ex.8 | Good | 14 | Good | Good | Good | 0.03 |
| Ex.9 | Good | 19 | Good | Good | Good | 0.05 |
| Ex.10 | Good | 18 | Good | Good | Good | 0.05 |
| Ex.11 | Good | 17 | Good | Good | Good | 0.03 |
| Ex.12 | Good | 18 | Good | Good | Good | 0.03 |
| Ex.13 | Good | 19 | Good | Good | Good | 0.03 |
| Ex.14 | Good | 21 | Good | Good | Good | 0.05 |
| Cex.4 | Good | 9 | Good | Good | Good | 0.03 |
| Cex.5 | Fair | 19 | Poor | Fair | Good | 0.10 |
| Cex.6 | Poor | 16 | Poor | Fair | Poor | 0.05 |
| Ref.1 | - | 19 | Good | Fair | Good | 0.15 |
| *2 : Compatibility of the pigments in the adhesive | | | | | | |

## White Adhesive Examples

Preparation of (meth)acrylic polymers

Polymer W1:

BA, 2HEA, AN and AA (weight ratio 58:36:2:4) were polymerized in ethyl acetate to form Polymer W1. The molecular weight (Mw) of the resultant polymer was 500,000, Tg was -53 degrees C, and solid was 33 weight %.

Polymer W2:

2MBA and AA (weight ratio 90:10) were polymerized in ethyl acetate to form Polymer W2. The molecular weight (Mw) of the resultant polymer was 400,000, Tg was -23 degrees C, and solid was 40 weight %.

Amino group-containing polymer

MMA, BMA and DMAEMA (weight ratio 60:34:6) were polymerized in ethyl acetate. The molecular weight (Mw) of the resultant polymer was 80,000, Tg was 66 degrees C, and solid was 40 weight %.

White pigment

Titanium oxide 1: TiPureR960 by DuPont
Titanium oxide 2: DYMIC SZ7030 by Dainichi-Seika
All "parts by weight" in the following examples and comparative examples were based on solid part.

Example 15

Eleven parts by weight of amino group-containing polymer, 55 parts by weight of Titanium oxide 1 and 0.2 parts by weight of MIBK were mixed with a mixer (ARE250 by Thinky) for 10 minutes, then gave a premix solution. To the premix solution, Polymer W1 was added such that Titanium oxide 1 was 30 parts by weight with respect to 100 parts by weight of Polymer W1, and mixed, then furnished the acrylic white adhesive solution.
To the resultant solution was added 0.2 parts by weight of 1,1'-isophthaloyl-bis (2-methylaziridine) with respect to 100 parts by weight of Polymer W1.
The acrylic white adhesive solution was coated onto a paper-based double face polyethylene laminated release liner by knife coating, dried and crosslinked by heating at 90 degrees C for five minutes, then an adhesive layer formed. The thickness of the adhesive layer was 30 $\mu$m. Then the adhesive layer of 50 $\mu$m thickness of green vinyl chloride film (DYNACAL DC5012 by Toyo Ink) was swelled with isopropyl alcohol, removed with squeegee (PA-1 by Sumitomo 3M Limited), then dried at 65 degrees C for five minutes, and gave a colored base film layer.

The obtained film layer was laminated on the adhesive layer to furnish a marking film.

Examples 16 to 20

Marking films were obtained in the same manner as Example 15. The amounts of each component are shown in Table 4.

Example 21

The adhesive layer was obtained in the same manner as Example 15. Then the adhesive layer of 50 $\mu$m thickness of yellow vinyl chloride film (Scotchcal $\mu$m TP3104 by Sumitomo 3M Limited) was swelled with isopropyl alcohol, removed with squeegee (PA-1 by Sumitomo 3M Limited), then dried at 65 degrees C for five minutes, and gave a colored base film layer.

The obtained film layer was laminated on the adhesive layer to furnish a marking film.

Comparative example 7

To Polymer W1 was add Titanium oxide 1 such that Titanium oxide 1 was 17.6 parts by weight with respect to 100 parts by weight of Polymer W1, then 40 parts by weight of ethyl acetate was added and the mixture was mixed with a mixer (ARE250 by Thinky) for 10 minutes, then gave an acrylic white adhesive solution. To the resultant solution was added 0.2 parts by weight of 1,1 '-isophthaloyl-bis (2-methylaziridine) with respect to 100 parts by weight of Polymer W1. Then a colored marking film was obtained in the same manner as Example 15.

Comparative examples 8 and 9

Marking films were obtained in the same manner as comparative example 7. The amounts of each component are shown in Table 4.

Reference W1

To Polymer W1 was added amino group-containing polymer such that the amino group-containing polymer was 10 parts by weight with respect to 100 parts by weight of Polymer W1, then the mixture was mixed with a mixer (ARE250 by Thinky) for ten minutes, then gave an acrylic clear adhesive solution. To the resultant solution was added 0.2 parts by weight of 1,1'-isophthaloyl-bis (2-methylaziridine) with respect to 100 parts by weight of Polymer W1. Then a marking film was obtained in the same manner as Example 15.

Reference W2

To Polymer W2 was added 0.2 parts by weight of 1,1'-isophthaloyl-bis (2-methylaziridine) with respect to 100 parts by weight of Polymer W2, then the mixture was mixed with a mixer (ARE250 by Thinky) for ten minutes, then gave an acrylic clear adhesive solution. Then a marking film was obtained in the same manner as Example 15.

Hiding power measurement

Test papers with white and black lines on them were prepared, then each film sample obtained above was applied on the test papers. Then color data of L*a*b* on the white and black lines were observed with colorimetric machine (CM-3700d by Konica Minolta) and the color data of d E * ab on the lines were calculated by the following equation.

$$d E * ab = [(L_2* - L_1*)^2 + (a_2* - a_1*)^2 + (b_2* - b_1*)^2]^{1/2}$$

$L_1*$, $a_1*$ and $b_1*$ were values before exposure and $L_2*$, $a_2*$ and $b_2*$ were those after exposure. Smaller value of d E * ab can be judged to be higher hiding power. The results are shown in Table 5.

Adhesion measurement

Test samples were prepared by cutting the films, which were obtained in the above Examples and Comparative examples, into length of 150 mm by width of 25 mm. The test samples were applied on melamine painted panels by Paltec at 20 degrees C. Application method followed JIS Z 0237 8.2.3. After 48 hours at 20 degrees C, 180 degree peel was measured with a tensile machine (Tensilon RTF by AND). Peel speed was 5 mm/second. The results are shown in Table 5.

Adhesion between film layer and adhesive layer

Test samples were prepared by cutting the films, which were obtained in the above Examples and Comparative examples, into length of 150 mm by width of 25 mm. The test samples were applied on melamine painted panels by Paltec at 20 degrees C. After aging for seven days at 65 degrees C and 95%RH, 180 degree peel was measured with a tensile machine (Tensilon RTF by AND). Peel speed was 5 mm/second.

Then the adhesive residue on the panel was judged by visual check. When the adhesive residue was not observed on the panel, it was ranked as "Good". When the adhesive residue was observed on the panel, it was ranked as "Poor". The results are shown in Table 5.

Table 4

| | Kind of carboxylic group-containing polymer | Titanium oxide | | Amount of amino group-containing polymer (parts by weight) |
|---|---|---|---|---|
| | | kind | amount (parts by weight) | |
| Ex 15 | W1 | 1 | 30 | 6 |
| Ex 16 | W1 | 1 | 40 | 8 |
| Ex 17 | W1 | 1 | 50 | 10 |
| Ex 18 | W1 | 1 | 100 | 20 |
| Ex 19 | W1 | 1 | 150 | 10 |
| Ex 20 | W2 | 1 | 40 | 8 |
| Ex 21 | W1 | 1 | 50 | 10 |
| Cex 7 | W1 | 1 | 17.6 | 0 |
| Cex 8 | W2 | 1 | 40 | 0 |
| Cex 9 | W2 | 2 | 40 | 0 |
| Ref W1 | W1 | - | 0 | 10 |
| Ref W2 | W2 | - | 0 | 0 |

Table 5

| | Hiding power | Adhesion | Adhesion between film layer and adhesive layer |
|---|---|---|---|
| Ex 15 | 2.05 | 20 | Good |
| Ex 16 | 3.24 | 18 | Good |
| Ex 18 | 0.97 | 15 | Good |
| Ex 18 | 0.57 | 9 | Good |
| Ex 19 | 0.18 | 7 | Good |
| Ex 20 | 0.95 | 16 | Good |
| Ex 21 | 3.63 | 14 | Good |

(continued)

|  | Hiding power | Adhesion | Adhesion between film layer and adhesive layer |
|---|---|---|---|
| Cex 7 | 8.21 | 15 | Good |
| Cex 8 | 6.97 | 23 | Poor |
| Cex 9 | 3.12 | 10 | Poor |
| Ref W1 | 20.3 | 20 | Good |
| Ref W2 | 28.4 | 20 | Good |

Example 22

The pigment pre-mixture, which comprises Polymer1/Pigment1/metyl-isobutyl-ketone (MIBK)=10:50:40 by weight, was prepared. Said acrylic resin compound was mixed with the paint shaker (ARE250, provided by Thinky) for 10 minutes.

Then the white acrylic adhesive solution, which comprises Adhesive Polymer 1 and white pre-mixture, was prepared. The ratio of Adhesive Polymer 1, Pigment1 and Polymer1 was 100:50:10 by weight. And Crosslinker 2 was mixed with said acrylic mixture. The ratio of Adhesive Polymer 1 and Crosslinker 2 was 100:0.2 by weight. The compatibility of said adhesive and pigment was judged as "Good".

Said acrylic adhesive compound was coated onto a polyethylene laminated release liner with a knife coater. Then said coated layer was dried and crosslinked for 5 minutes at 90 degrees C. After drying, 30 micrometer thick adhesive was obtained. Then said acrylic adhesive was laminated with 80 micrometer white polyvinyl chloride film and Example 22 was obtained.

The results are described in Table 6.

Example 23

Example 23 was prepared as well as Example 22. The results are described in Table 6.

Example 24

The pigment pre-mixture was prepared as well as Example 22. Then the white acrylic solution, which comprises Polymer1, Polymer2 and white pre-mixture, was prepared. The ratio of Polymer1, Polymer2 and Pigment1, was 100:100:100 by weight. And Crosslinker1 was mixed with said acrylic mixture. The ratio of Polymer 2 and Crosslinker 1 was 100:0.2 by weight. The compatibility of said adhesive and pigment was judged as "Good".

Said acrylic adhesive compound was coated onto a polyester release liner with a knife coater. Then said coated layer was dried and crosslinked for 5 minutes at 90 degrees C and 2 minutes at 155 degrees C. After drying, 50 micrometer white acrylic film was obtained.

Then said acrylic film was laminated with same adhesive as Example 22 and Example 23 was obtained.

The results are described in Table 6.

Comparative example 10

Comparative example 10 was prepared as well as Example 22, except adhesive just comprises Adhesive Polymer 1 and Croslinker 2. Said ratio was 100:0.2. The results are described in Table 6.

Comparative example 11

Comparative example 11 was prepared as well as comparative example 10. The results are described in Table 6.

Comparative example 12

Comparative example 12 was prepared as well as Example 24, except adhesive just comprises Adhesive Polymer 1 and Crosslinker 2. Said ratio was 100:0.2 by weight. The results are described in Table 6.

Examples 22 to 24 and Comparative Examples 10 to 12 were printed using inkjet technology. The inkjet image was printed onto graphics adhesive film by using the solvent inkjet printer (XC540, made by Roland). ECO-SOL MAX inks provided by Roland were used. The printing conditions were as follows. Six color (Cyan, Magenta, Yellow, Black, Light cyan, Light magenta), Dual mode, High image quality mode (720dpi× 1440dpi), Variable dot. 300% ink density image was printed. Printing speed was about 3m/hr. Platen temperature was about 40°C. The image quality was recognized as "good".

The specimen was cut to 25mm width and 150mm length. Said specimen was applied on Substrate1 to Substrate3 at 20 degrees C. Application method followed JIS Z 0237 8.2.3. The specimen was kept for 48 hours at 20 degrees C. The 180 degree peel force was measured by using "Tensilon". The peel speed was 300mm/min.

The adhesions both after printing and before printing were measured. "Adhesion retention" was calculated as follows.

$$(\text{Adhesion retention\%}) = (\text{Adhesion after printing}) \diagup (\text{Adhesion before printing}) * 100$$

The specimen was cut to 100mm width and 100mm length. Said specimen was applied on Substrate2 at 25 degrees C. Said specimen was kept for 24hours at room temperature. Then the specimen was cut. The specimen was kept for 24 hours at 65 degrees C. The crosscut width was measured with a microscope having the scale.

Table 6 Measurement Results

| | Substrate | Adhesion before printing (N/25mm) | Adhesion after printing (N/25mm) | Adhesion retention (%) | Crosscut (mm) |
|---|---|---|---|---|---|
| Example 22 | Aluminum panel A5052P | 27 | 20 | 72 | -- |
| Example 23 | Alpolic PC white panel provided by Mitsubishi Chemical (Aluminum composite) | 24 | 14 | 59 | 0.30 |
| Example 24 | Melamine painted panel provided by Paltec | 12 | 8 | 65 | 0.10 |
| CEx. 10 | Aluminum panel A5052P | 21 | 8 | 37 | -- |
| CEx. 11 | Alpolic PC white panel provided by Mitsubishi Chemical (Aluminum composite) | 23 | 7 | 32 | Film separated |
| CEx. 12 | Melamine painted panel provided by Paltec | 14 | 6 | 49 | 0.10 |

Example 25

The pre-mixture, which comprises Polymer 1/ Pigment 1/methyl isobutyl ketone (MIBK) = 10:50:40 by weight, was prepared. Said acrylic resin compound was mixed with the paint shaker (ARE250, provided by Thinky) for 10 minutes.

Then.the white acrylic adhesive solution, which comprises Adhesive Polymer 1 and pre-mixture of said Pigment 1, was prepared. The ratio of Adhesive Polymer 1, Pigment 1 and Dispersant1 was 100:50:10 by weight. And Crosslinker 2 was mixed with said adhesive mixture. The ratio of Adhesive Polymer 1 and Crosslinker 2 was 100:0.2 by weight. The compatibility of said adhesive and filler was judged as "Good".

Said adhesive compound was coated onto a polyethylene laminated release liner with a knife coater. Then said coated layer was dried and crosslinked at 90 degrees C for 5 minutes. After drying, 30 micrometer adhesive was obtained. Then said adhesive was laminated with calendered 80 micrometer white PVC film and Example 25 was obtained. The measurement results are described in Table 7.

Examples 26 to 37

Adhesive compounds were made as described, all having Pigment 1 as the inorganic filler. Examples from the Adhesives were made as in Example 25. The measurement results are described in Table 7.

| Example | Adhesive | Inorganic Filler wt% | Dispersant | Dispersant (wt) |
|---|---|---|---|---|
| 25 | 1 | 50 | Polymer 1 | 10 |
| 26 | 1 | 50 | Polymer 1 | 10 |
| 27 | 1 | 100 | Polymer 1 | 10 |
| 28 | 2 | 50 | Polymer 1 | 10 |
| 29 | 3 | 50 | Polymer 1 | 10 |
| 30 | 4 | 50 | Polymer 1 | 10 |
| 31 | 5 | 50 | Polymer 1 | 10 |
| 32 | 4 | 100 | Polymer 1 | 10 |
| 33 | 5 | 100 | Polymer 1 | 10 |
| 34 | 6 | 100 | Polymer 1 | 10 |
| 35 | 1 | 10 | Polymer 1 | 10 |
| 36 | 1 | 30 | Polymer 1 | 10 |
| 37 | 1 | 50 | Polymer 1 | 5 |

Example 38

The pre-mixture, which comprises Polymer 1/ an inorganic filler of aluminum hydroxide, (HIGILITE™ H42T made by Showa Denko)/methyl isobutyl ketone (MIBK) = 10:50:40 by weight, was prepared. Said acrylic resin compound was mixed with the paint shaker (ARE250, provided by Thinky) for 10 minutes.
Then the white acrylic adhesive solution, which comprises Adhesive Polymer 1 and the pre-mixture was prepared. The ratio of Adhesive Polymer 1, aluminum hydroxide and Polymer 1 was 100:50:10 by weight. Crosslinker 2 was mixed with said adhesive mixture. The ratio of Adhesive Polymer 1 and Crosslinker was 100:0.2 by weight. The compatibility of said adhesive and filler was judged as "Good".
Then adhesive coating and film lamination were done as in Example 25 and Example 38 was obtained. The measurement results are described in Table 7.

Comparative example 13

Comparative example 13 was prepared as well as Example 25, except adhesive just comprises Adhesive Polymer 1 and Crosslinker 2. Said ratio was 100:0.2 by weight. The measurement results are described in Table 7.

Comparative example 14

Comparative example 14 was prepared as well as comparative example 13, except changing adhesive to Adhesive Polymer 2. The measurement results are described in Table 7.
Examples 25 to 38 and Comparative Examples 13 to 14 were printed using inkjet technology. The inkjet image was printed onto graphics adhesive film by using the solvent inkjet printer (SC540, made by Roland). ECO-SOL MAX inks provided by Roland were used. The printing conditions were as follows. Six color (Cyan, Magenta, Yellow, Black, Light cyan, Light magenta), Dual mode, High image quality mode (720dpi×1440dpi), Variable dot. 300% ink density image was printed. Printing speed was about 3m/hr. Platen temperature was about 40°C. The image quality was recognized as "good".
The specimen was cut to 25mm width and 150mm length. Said specimen was applied on Substrate1 to Substrate3 at 20 degrees C. Application method followed JIS Z 0237 8.2.3. The specimen was kept for 48 hours at 20 degrees C. The 180 degree peel force was measured by using "Tensilon". The peel speed was 300mm/min.
The adhesions both after printing and before printing were measured. "Adhesion retention" was calculated as follows.

$$(\text{Adhesion retention\%}) = (\text{Adhesion after printing}) / (\text{Adhesion before printing}) *100$$

The specimen was cut 100mm width and 100mm length. Said specimen was applied on Substrate2 at 25 degrees C. Said specimen was kept for 24 hours at room temperature. Then the specimen was cut. The specimen was kept for 24 hours at 65 degrees C. The crosscut width was measured with a microscope having the scale.

The appearance of said specimen was judged by visual observation. When a film removal around crosscut was not recognized, it was judged as "Good". When a film peeling around crosscut was recognized, it was judged as "Poor".

Table 7 Measurement Results

| Ex | Substrate | Adhesion before printing (N/25mm) | Adhesion after printing (N/25nmm) | Adhesion retention (%) | Crosscut gap, X-gash (mm) | Appearance |
|---|---|---|---|---|---|---|
| 25 | S1 | 27 | 20 | 72 | 0.30 | Good |
| 26 | S2 | 24 | 14 | 59 | ** | ** |
| 27 | S3 | 11 | 4 | 40 | 0.50 | Good |
| 28 | S3 | 12 | 5 | 40 | 0.25 | Good |
| 29 | S3 | 11 | 5 | 47 | 0.20 | Good |
| 30 | S3 | 16 | 6 | 37 | 0.25 | Good |
| 31 | S3 | 15 | 6 | 40 | 0.25 | Good |
| 32 | S3 | 11 | 5 | 49 | 0.40 | Good |
| 33 | S3 | 5 | 6 | 125 | 0.50 | Good |
| 34 | S3 | 4 | 10 | 233 | 0.35 | Good |
| 35 | S1 | 31 | 16 | 50 | 0.40 | Good |
| 36 | S1 | 30 | 17 | 55 | 0.36 | Good |
| 37 | S1 | 29 | 17 | 60 | 0.26 | Good |
| 38 | S1 | 27 | 14 | 51 | 0.21 | Good |
| CEx. 13 | S1 | 21 | 8 | 37 | 10.0 | Poor |
| CEx. 13 | S2 | 23 | 7 | 32 | ** | ** |
| CEx. 13 | S3 | 24 | 7 | 29 | ** | ** |
| CEx. 14 | S1 . | 20 | 9 | 45 | 2.5 | Poor |
| Substrate1(S1) : Aluminum panel A5052P<br>Substrate2(S2) : Alpolic PC white panel provided by Mitsubishi Chemical (Aluminum composite)<br>Substrate3(S3) : Melamine painted panel provided by Paltec | | | | | | |

Although the present application has been described with reference to preferred embodiments, workers skilled in the art will recognize that changes may be made in form and detail without departing from the spirit and scope of the application.

**Claims**

1. An acrylic colored adhesive comprising
   a carboxylic group-containing (meth) acrylic polymer;
   a coloring agent comprising a pigment or a dye; and an amino group-containing (meth) acrylic polymer free of aromatic vinyl monomers,
   wherein the weight ratio of the pigment or dye and the amino group-containing (meth) acrylic polymer in the coloring agent is 1 to 100 : 5 to 1000 parts by weight.

2. The acrylic colored adhesive according to claim 1, wherein the carboxylic group-containing (meth) acrylic polymer further comprises hydroxyl groups.

3. The acrylic colored adhesive according to claim 1 or 2, further comprising a crosslinker.

4. A marking film comprising a base film layer and an adhesive layer comprising the acrylic colored adhesive according to any one of claims 1 to 3.

5. The marking film according to claim 4, wherein the marking film has a liner disposed on the opposite side of the adhesive layer from the base film layer.

6. The marking film according to any one of claims 4 to 5, wherein the acrylic colored adhesive is an acrylic white adhesive, and wherein the acrylic white adhesive comprises 25 to 150 parts by weight of white pigment with respect to 100 parts by weight of the carboxylic group-containing (meth) acrylic polymer.

7. The marking film according to claim 6, wherein the amount of the an amino group-containing (meth) acrylic polymer free of aromatic vinyl monomers is about 5 to about 20 parts by weight with respect to 100 parts by weight of the carboxylic group-containing (meth) acrylic polymer.

8. A method of preparing of an acrylic colored adhesive comprising the steps of:

   preparing a coloring agent by mixing a pigment or a dye; and an amino group-containing (meth) acrylic polymer free of aromatic vinyl monomers; and
   mixing the resultant coloring agent and a carboxylic group-containing (meth) acrylic polymer.

9. A method of preparing of an acrylic colored adhesive comprising the steps of:

   preparing a coloring agent by mixing a pigment or a dye, and a carboxylic group-containing (meth) acrylic polymer, and
   mixing the resultant coloring agent and an amino group-containing (meth) acrylic polymer free of aromatic vinyl monomers.

10. The method of preparing of an acrylic colored adhesive according to claim 9 wherein the carboxylic group-containing (meth) acrylic polymer further comprises hydroxyl groups.

11. The method of preparing of the acrylic colored adhesive according to claim 8 or 9 further comprising mixing in a crosslinker.

**Patentansprüche**

1. Farbiger Acrylklebstoff, umfassend
   ein eine Carboxygruppe enthaltendes (Meth-) Acrylpolymer,
   eine Färbemittel, umfassend ein Pigment oder einen Farbstoff, und ein eine Aminogruppe enthaltendes (Meth-) Acrylpolymer frei von aromatischen Vinylmonomeren,
   wobei das Gewichtsverhältnis zwischen dem Pigment oder Farbstoff und dem eine Aminogruppe enthaltenden (Meth-) Acrylpolymer in dem Färbemittel 1 bis 100 : 5 bis 1000 Gew.-Teile ist.

2. Farbiger Acrylklebstoff nach Anspruch 1, wobei das eine Carboxygruppe enthaltende (Meth-) Acrylpolymer ferner Hydroxylgruppen umfasst.

3. Farbiger Acrylklebstoff nach Anspruch 1 oder 2, ferner ein Vernetzungsmittel umfassend.

4. Markierfolie, eine Basisfolienschicht und eine Klebstoffschicht, die den farbigen Acrylklebstoff nach einem der Ansprüche 1 bis 3 umfasst, umfassend.

5. Markierfolie nach Anspruch 4, wobei auf der Markierfolie auf der der Basisfolienschicht gegenüberliegenden Seite der Klebstoffschicht eine Einlage angeordnet ist.

6. Markierfolie nach einem der Ansprüche 4 und 5, wobei der farbige Acrylklebstoff ein weißer Acrylklebstoff ist und wobei der weiße Acrylklebstoff 25 bis 150 Gew.-Teile weißes Pigment gegenüber 100 Gew.-Teilen des eine Carboxygruppe enthaltenden (Meth-) Acrylpolymers umfasst.

7. Markierfolie nach Anspruch 6, wobei die Menge des eine Aminogruppe enthaltenden (Meth-) Acrylpolymers frei von aromatischen Vinylmonomeren etwa 5 bis etwa 20 Gew.-Teile gegenüber 100 Gew.-Teilen des eine Carboxygruppe enthaltenden (Meth-) Acrylpolymers beträgt.

8. Verfahren zur Herstellung eines farbigen Acrylklebstoffs, umfassend die folgenden Schritte:

Herstellen eines Färbemittels durch Mischen eines Pigments oder eines Farbstoffs und eines eine Aminogruppe enthaltenden (Meth-) Acrylpolymers frei von aromatischen Vinylmonomeren und
Mischen des resultierenden Färbemittels und eines eine Carboxygruppe enthaltenden (Meth-) Acrylpolymers.

9. Verfahren zur Herstellung eines farbigen Acrylklebstoffs, umfassend die folgenden Schritte:

Herstellen eines Färbemittels durch Mischen eines Pigments oder eines Farbstoffs und eines eine Carboxygruppe enthaltenden (Meth-) Acrylpolymers und
Mischen des resultierenden Färbemittels und eines eine Aminogruppe enthaltenden (Meth-) Acrylpolymers frei von aromatischen Vinylmonomeren.

10. Verfahren zur Herstellung eines farbigen Acrylklebstoffs nach Anspruch 9, wobei das eine Carboxygruppe enthaltende (Meth-) Acrylpolymer ferner Hydroxylgruppen umfasst.

11. Verfahren Herstellung des farbigen Acrylklebstoffs nach Anspruch 8 oder 9, ferner das Einmischen eines Vernetzungsmittels umfassend.

**Revendications**

1. Adhésif acrylique coloré comprenant
un polymère (méth)acrylique contenant un groupe carboxylique ;
un agent colorant comprenant un pigment ou un colorant ; et un polymère (méth)acrylique contenant un groupe amino exempt de monomères vinyliques aromatiques,
dans lequel le rapport pondéral du pigment ou colorant et du polymère (méth)acrylique contenant un groupe amino dans l'agent colorant va de 1 à 100 : 5 à 1000 parties en poids.

2. Adhésif acrylique coloré selon la revendication 1, dans lequel le polymère (méth)acrylique contenant un groupe carboxylique comprend en outre des groupes hydroxyle.

3. Adhésif acrylique coloré selon la revendication 1 ou 2, comprenant en outre un agent de réticulation.

4. Film de marquage comprenant une couche de film de base et une couche adhésive comprenant l'adhésif acrylique coloré selon l'une quelconque des revendications 1 à 3.

5. Film de marquage selon la revendication 4, où le film de marquage possède un revêtement disposé sur le côté opposé de la couche adhésive à partir de la couche de film de base.

**6.** Film de marquage selon l'une quelconque des revendications 4 à 5, où l'adhésif acrylique coloré est un adhésif acrylique blanc, et dans lequel l'adhésif acrylique blanc comprend 25 à 150 parties en poids de pigment blanc par rapport à 100 parties en poids du polymère (méth)acrylique contenant un groupe carboxylique.

**7.** Film de marquage selon la revendication 6, dans lequel la quantité du polymère (méth)acrylique contenant un groupe amino exempt de monomères vinyliques aromatiques va d'environ 5 à environ 20 parties en poids par rapport à 100 parties en poids du polymère (méth)acrylique contenant un groupe carboxylique.

**8.** Procédé de préparation d'un adhésif acrylique coloré comprenant les étapes consistant à :

préparer un agent colorant en mélangeant un pigment ou un colorant ; et un polymère (méth)acrylique contenant un groupe amino exempt de monomères vinyliques aromatiques ; et
mélanger l'agent colorant résultant et un polymère (méth)acrylique contenant un groupe carboxylique.

**9.** Procédé de préparation d'un adhésif acrylique coloré comprenant les étapes consistant à :

préparer un agent colorant en mélangeant un pigment ou un colorant, et un polymère (méth)acrylique contenant un groupe carboxylique, et
mélanger l'agent colorant résultant et un polymère (méth)acrylique contenant un groupe amino exempt de monomères vinyliques aromatiques.

**10.** Procédé de préparation d'un adhésif acrylique coloré selon la revendication 9, dans lequel le polymère (méth)acrylique contenant un groupe carboxylique comprend en outre des groupes hydroxyle.

**11.** Procédé de préparation de l'adhésif acrylique coloré selon la revendication 8 ou 9, comprenant en outre le mélange dans un agent de réticulation.

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 3500240 B
- JP 2004051753 A
- JP 3516035 B
- JP 2927701 B
- JP 56012875 B
- JP 2547031 B

- JP 2003183602 A
- JP 5108011 A
- JP 2007313651 A
- JP 2005329642 A
- JP 7238267 A
- JP 3670861 B